# EUROPÄISCHE PATENTANMELDUNG

(11) **EP 2 532 506 A1**
(43) Veröffentlichungstag der Anmeldung: **12.12.2012**
(21) Anmeldenummer: 11168791.9
(22) Anmeldetag: 06.06.2011
(51) Int. Cl.: B29C 47/34, B29C 47/08

(54) **Abzugsvorrichtung für einen Extruder**

(71) Anmelder: Battenfeld-Cincinnati Germany GmbH, 32547 Bad Oeyenhausen (DE)
(72) Erfinder: Möllenbeck, Stephan, 47441 Moers (DE); Braatz, Wolfgang, 47906 Kempen (DE)

(57) **Zusammenfassung**

Die Erfindung betrifft eine Abzugsvorrichtung für einen Extruder zum Abziehen und Transportieren eines extrudierten Profils (6), die mindestens zwei zusammenwirkende Abzugseinheiten (7) aufweist, wobei jede Abzugseinheit (7) aus einer Kette (8) besteht, auf der eine Vielzahl von Stollenträgern (9) montiert ist, wobei auf den Stollenträgern (9) Stollen (10) angeordnet sind, um eine Abzugskraft auf das Profil (6) zu übertragen.
Erfindungsgemäß ist dabei vorgesehen, dass mindestens auf zwei der Stollenträger (9) Mittel (11) zur Herstellung einer form- oder kraftschlüssigen Verbindung für ein sich über mehrere Stollen (10) erstreckendes Band (12) angeordnet sind.

## Beschreibung

Die Erfindung betrifft eine Abzugsvorrichtung für einen Extruder zum Abziehen und Transportieren eines extrudierten Profils, die mindestens zwei zusammenwirkende Abzugseinheiten aufweist, wobei jede Abzugseinheit aus einer Kette besteht, auf der eine Vielzahl von Stollenträgern montiert ist, wobei auf den Stollenträgern Stollen angeordnet sind, um eine Abzugskraft auf das Profil zu übertragen.

Nach dem Extrudieren eines Kunststoffprofils, also nach dem Hindurchpressen thermoplastischer Kunststoffschmelze durch ein Extrusionswerkzeug, muss das so hergestellte Profil abkühlen und während des Abkühlens in der gewünschten Profilform gehalten werden. Hierzu werden meist Vakuumkalibrier-Vorrichtungen eingesetzt. Um das abgekühlte und endprofilierte Profil aus der Kalibrierstation abzuziehen, werden Abzugsvorrichtungen eingesetzt.

Hierfür sind Raupenabzüge bekannt, die meist aus zwei oder mehreren zusammenwirkenden Einzelraupen bestehen, die gemeinsam das abzuziehende Profil kontaktieren und so eine Abzugskraft aufbringen. Eine Abzugsraupe besteht aus einer umlaufenden Abzugskette, auf der einzelne Abzugsstollen angeordnet sind. Die Abzugsstollen entsprechen von ihrem Querschnitt her dem abzuziehenden Profil.

Zu den gängigsten Abzügen gehören die sogenannten Raupenabzüge. Die notwendige Abzugskraft wird hier mit Hilfe von umlaufenden mit Gummistollen besetzten Förderketten, den sogenannten Raupenketten, deren Förderfläche parallel zu dem zu fördernden Extrusionsprodukt verläuft, in das Rohr eingeleitet. Je nach produziertem Profil werden unterschiedliche Anforderungen an den Abzug gestellt. Es ist daher erforderlich, die Bedingungen des Abzuges individuell auf das Profil anzupassen und somit auch bedarfsweise die auf der Raupenkette montierten Stollen auszutauschen.

Die DE 299 09 210 schlägt vor die gesamte Antriebseinheit des Abzuges mit entsprechenden Schnellverschlüssen zu versehen und die gesamte Abzugsvorrichtung bzw. Teile davon auszutauschen.

Einen anderen Lösungsansatz bietet die DE 199 43 449 C1, bei der vorgeschlagen wird, die auf den Raupenketten montierten Stollen über eine entsprechende automatische Wechselvorrichtung auszuklinken und durch andere auszutauschen.

Ein weiteres Abzugssystem sind die sogenannten Bandabzüge. Hier sind nicht einzelne Stollen auf den Ketten montiert, welche im Abzug umlaufen, sondern ein komplettes Band umspannt diesen Bereich. Bedingt durch die Tatsache, dass ein und dasselbe Profil in immer kürzer werdenden Intervallen gefertigt wird, ist es erforderlich, die Extrusionslinien in kürzeren Abständen umzurüsten. Hierbei ist auch der Wechsel von einem Raupenabzug mit Stollen auf einen Bandabzug teilweise erforderlich.

**Aufgabe** der Erfindung ist es, eine vereinfachte Möglichkeit anzubieten, einen bekannten Raupenabzug ohne großen Montageaufwand in einen Bandabzug umzurüsten.

Die **Lösung** der Aufgabe ist in Verbindung mit dem Oberbegriff des Anspruches 1 dadurch gekennzeichnet, dass mindestens auf zwei der Stollenträger Mittel zur Herstellung einer form- oder kraftschlüssigen Verbindung für ein sich über mehrere Stollen erstreckendes Band angeordnet sind.

Diese Lösung bietet somit die Möglichkeit, zwei Stollen des Raupenabzuges auszutauschen und ein Band über die dazwischen liegenden Stollen zu spannen. Praktischerweise werden die Abschnitte so gewählt, dass die Montage im geraden Teil der Abzugseinheit ist. So erfolgt beispielsweise die Umrüstung einer Abzugseinheit mittels dreier Bandabschnitte, so dass nach der Umrüstung eine Abzugseinheit drei Bandabschnitte umfasst, die jedoch so hintereinander angeordnet sind, dass sie auf der Abzugseinheit wie eine Abzugseinheit mit einem durchgehenden Band wirkt.

In einer ersten Fortbildung wird vorgeschlagen, dass an mindestens einem der zwei Stollenträger mit Mitteln zur Herstellung einer form- und kraftschlüssigen Verbindung weitere Mittel angeordnet sind, die ein Spannen des Bandes zwischen dem Stollenträger mit Mitteln zur Herstellung einer form- und kraftschlüssigen Verbindung ermöglicht. Durch diese zusätzlichen Mittel kann das sich über mehrere Stollen erstreckende Band gespannt werden. Einerseits erleichtert ein entspanntes Band die Montage auch der Stollenträger, andererseits kann über diese Spannvorrichtung der Abstand zu dem benachbarten Bandabschnitt optimiert werden.

Weiterbildungsgemäß ist vorgesehen, dass das so montierte Band über die Mittel zur Herstellung einer form- und kraftschlüssigen Verbindung das Band derart befestigen, dass das Band auf der zum Profil hinweisenden Seite keine Unebenheiten aufweist. Es kann somit sichergestellt werden, dass auf das zu transportierende und abzuziehende Profil keine Markierungen durch Unebenheiten oder Flattern des Bandes übertragen werden.

Weiterbildungsgemäß ist vorgesehen, dass das sich über mehrere Stollen erstreckende Band über die Mittel geklemmt ist. Das Band muss somit nicht zwingend direkt mit dem Stollenträger verschraubt werden. Es kann also nur zwischen zwei Elementen eingeklemmt werden, die dann wiederum am Stollenträger angeordnet werden oder bei entsprechender Ausgestaltung des Bandendes in eine vorgesehene Nut eingeführt werden und nur an dem zweiten Stollenträger mit entsprechenden Mitteln geklemmt und verspannt werden. Es wird somit die Möglichkeit geboten, das Band an einer Seite vom Stollenträger zu fixieren und an einer anderen Stelle über die vorgeschlagenen Mittel kraft- oder formschlüssig mit dem Stollenträger zu verbinden und entsprechend über mehrere Stollen hinweg zu spannen.

In einer weiteren Fortbildung ist vorgesehen, dass das sich über mehrere Stollen erstreckende Band aus mehreren Teilen besteht. Es ist also vorgesehen, dass das Band, das sich um die gesamte Abzugseinheit erstreckt, nicht nur in Umlaufrichtung aus mehreren Teilen besteht, sondern auch in der Breite mehrstückig sein kann. Betrachtet man beispielsweise die Abzugseinheit quer zur Extrusionsrichtung, so erstreckt sich über die Stollenbreite zunächst ein Abschnitt mit einem Band, danach ein Bereich ohne Band, in dem die freien Stollen zu sehen sind, und anschließend wieder ein Bereich mit einem Band. Eine derartige Ausgestaltung könnte natürlich in gewissen Grenzen beliebig ausgestaltet sein, so dass auch drei derartige Bänder sich über den Bereich erstrecken. Dies hat den Vorteil, dass man beispielsweise Profile mit empfindlichen Bereichen, beispielsweise mit einer angespritzten Dichtlippe, nicht durch das Band im Abzug beschädigt würde, weil man selbstverständlich diesen Teil des Profils in den Bereich des Abzuges ohne Band legen würde.

Zur Vereinfachung der Montage wird weiterbildungsgemäß vorgeschlagen, dass die Mittel zur Herstellung einer form- oder kraftschlüssigen

Verbindung so montiert werden können wie die Stollen auf dem Raupenabzug. Die Mittel können so entweder aufgeschraubt oder aufgeschoben werden. Dies bietet den Vorteil, dass zur Umrüstung kein weiteres Werkzeug als bei der Montage der Stollen erforderlich ist. Verfügt beispielsweise der Raupenabzug über ein Stollenschnellwechselsystem - hier werden die Stollen mittels einer Feder gehalten - können die Stollen ausgerastet und demontiert werden und umgekehrt die Mittel zur Befestigung des Bandes montiert und über die Federverbindung wieder eingerastet werden. Handelt es sich um einen Raupenabzug, bei dem die Stollen auf die Stollenträger verschraubt sind, ist vorgesehen, dass die entsprechenden Mittel zur Herstellung der kraft- und formschlüssigen Verbindung in gleicher Weise mit dem Stollenträger verschraubbar sind.

Die vorgeschlagene Erfindung ermöglicht es somit, mittels weniger Handgriffe einen im Einsatz befindlichen Raupenabzug mit Stollen in einen Bandabzug umzurüsten.

In den Zeichnungen wird schematisch eine erfindungsgemäße Vorrichtung gezeigt:
- Fig. 1: zeigt eine typische Extrusionslinie
- Fig. 2: einen Schnitt durch eine Abzugsvorrichtung
- Fig. 3: einen Ausschnitt der Abzugsvorrichtung aus Figur 2
- Fig. 4: eine vergrößerte Teildarstellung der Verbindung vom Band zum Stollenträger aus Figur 3
- Fig. 5: eine Draufsicht auf eine Abzugseinheit mit zwei Bändern

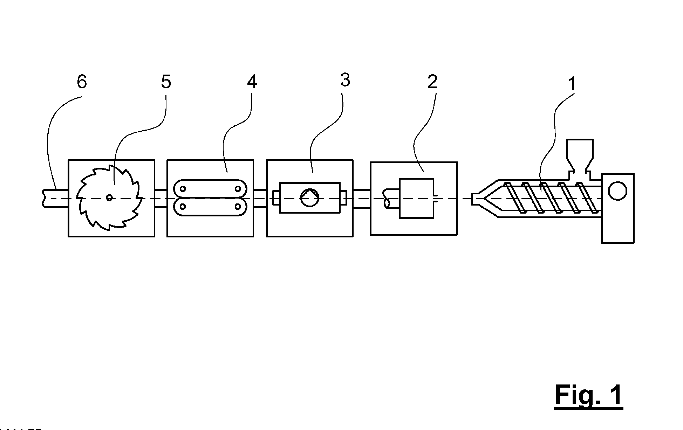

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

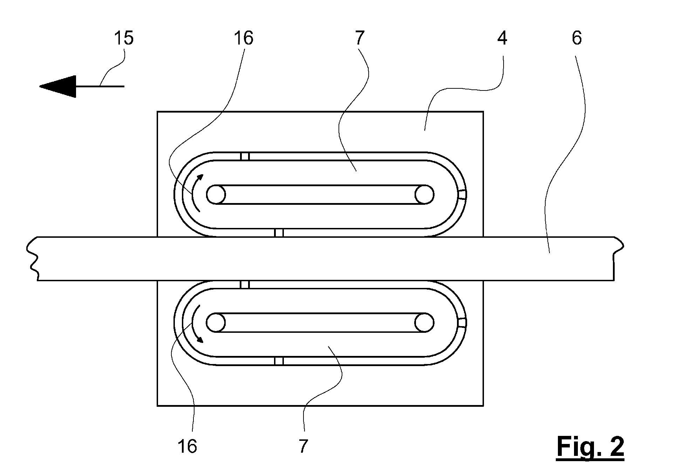

Figur 2 zeigt eine schematische vergrößerte Darstellung eines Bereiches aus Figur 1, den Bereich mit der Abzugsvorrichtung 4. Die Abzugsvorrichtung 4 besteht aus zwei Abzugseinheiten 7, von denen eine oben und eine unten angeordnet ist. Man spricht auch hier von einem Ober- und Unterzug. Zwischen den beiden Abzugseinheiten wird das Profil 6 mittels Kraftschluss in Extrusionsrichtung 15 abgezogen und transportiert. Die Bewegungsrichtung der Abzugseinheiten 7 ist durch die beiden Pfeile 16 kenntlich gemacht.

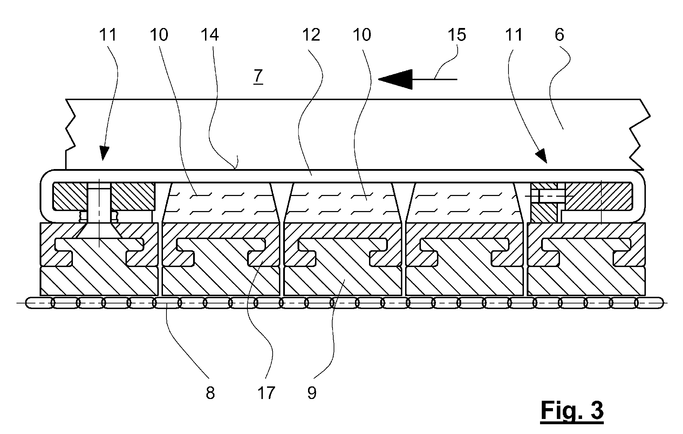

Figur 3 zeigt einen Teilbereich der Abzugseinheit 7, wobei hier ein Teilbereich der unteren Abzugseinheit dargestellt wird. Das Profil 6 wird über das Band 12 in Extrusionsrichtung gefördert. Das Band erstreckt sich über mehrere Stollen 10 und ist an seinem jeweiligen Ende kraft- oder formschlüssig über die Mittel 11 mit dem Stollenträger 9 verbunden. Die Stollenträger 9 sind mit der Kette 8 verbunden, wobei die Verbindungstechnik hier nicht dargestellt ist. Die Seite des Bandes 12, die dem Profil 6 zugewandt ist, weist keine Unebenheiten auf, wodurch sichergestellt ist, dass keine Markierungen auf das Profil 6 übertragen werden. Die Kantengestaltung der Mittel zur Herstellung einer kraft- oder formschlüssigen Verbindung 11 ist hierbei so gewählt, dass der bei der Montage des Bandes 6 entstehende Radius 13 größer 10 mm ist. Somit ist sichergestellt, dass auch bei der Umlenkung des Bandendes keine Erhebung entsteht, die Markierungen ins Profil 6 übertragen könnte.

Ein derartiger Aufbau der Kombination aus Stollenträger 9, Stollen 10, Band 12 und Mittel 11 schließt sich rechts oder links fortlaufend an, so dass beispielsweise durch drei solcher nebeneinander angeordneter Abschnitte ein umlaufendes Band je Abzugseinheit 7 entsteht.

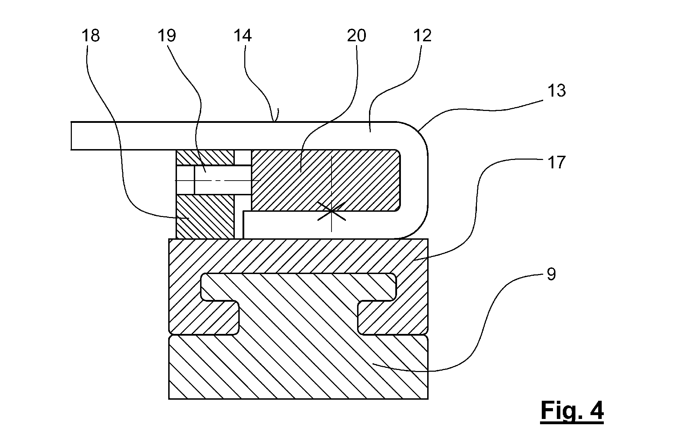

Figur 4 zeigt in einer weiteren vergrößerten Darstellung eine Ausgestaltung der Mittel 11 zur Herstellung einer form- oder kraftschlüssigen Verbindung. Auf den Stollenträger 9 ist ein Trägerelement 17 aufgeschoben, das eine Anschlagrippe 18 aufweist. In dieser Anschlagrippe 18 ist mindestens ein Spannelement 19 vorgesehen, über das die Klemmplatte 20 verschoben werden kann. Durch das Verschieben der Klemmplatte 20 wird das darüber befestigte Ende des Bandes 12 ebenfalls verschoben, wodurch das Band 12 in Gänze gespannt wird. Die Montagemittel 11 sind hierbei so gestaltet, dass der beim Montieren des Bandes 12 zwangsläufig entstehende Radius 13 eine Größe von mindestens 10 mm aufweist.

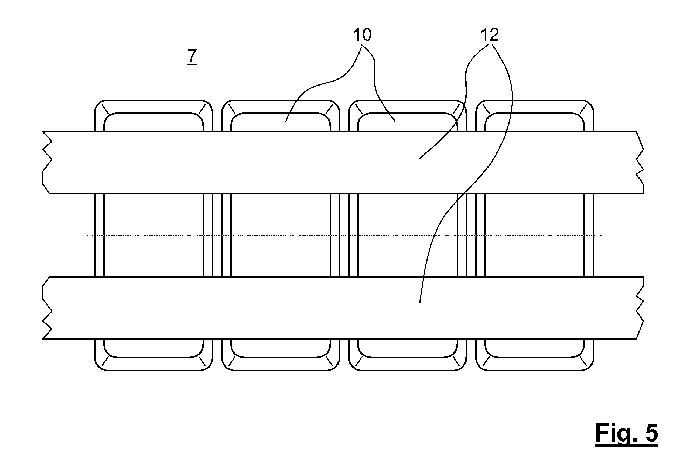

Figur 5 verdeutlicht noch einmal die Möglichkeit die Abzugseinheit mit einem Band aus mehreren Teilen quer zur Extrusionsrichtung auszuführen. Die Abzugseinheit 7 besteht aus mehreren Stollen 10 über die ein Band 12 gespannt ist. Das Band 12 besteht aus zwei Teilen die die im Außenbereich der Abzugseinheit 7 angeordnet sind. Der mittlere Bereich der Abzugseinheit 7 ist somit frei.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Abzugseinheit
- 8: Kette
- 9: Stollenträger
- 10: Stollen
- 11: Mittel zur Herstellung einer form- oder kraftschlüssigen Verbindung
- 12: Band
- 13: Radius von 12
- 14: Seite von 12 Richtung 6
- 15: Extrusionsrichtung
- 16: Bewegungsrichtung in 7
- 17: Trägerelement von 11
- 18: Anschlagrippe von 11
- 19: Spannelement in 11
- 20: Klemmplatte von 11

## Patentansprüche

1. Abzugsvorrichtung (4) für einen Extruder (1) zum Abziehen und Transportieren eines extrudierten Profils (6),
die mindestens zwei zusammenwirkende Abzugseinheiten (7) aufweist,
wobei jede Abzugseinheit (7) aus einer Kette (8) besteht, auf der eine Vielzahl von Stollenträgern (9) montiert ist,
wobei auf den Stollenträgern (9) Stollen (12) angeordnet sind, um eine Abzugskraft auf das Profil (6) zu übertragen,
**dadurch gekennzeichnet, dass**
mindestens auf zwei der Stollenträger (9) Mittel (13) zur Herstellung einer form- oder kraftschlüssigen Verbindung für ein sich über mehrere Stollen (10) erstreckendes Band (15) angeordnet sind.

2. Abzugsvorrichtung (4) nach Anspruch 1, **dadurch gekennzeichnet, dass** an mindestens einem der zwei Stollenträger (9) mit Mitteln (13) zur Herstellung einer form- oder kraftschlüssigen Verbindung weitere Mittel angeordnet sind, die ein Spannen des Bandes (15) zwischen zwei Stollenträgern (9) mit Mitteln (13) zur Herstellung einer form- oder kraftschlüssigen Verbindung ermöglichen.

3. Abzugsvorrichtung (4) nach Anspruch 2, **dadurch gekennzeichnet, dass** die Mittel (13) zur Herstellung einer form- oder kraftschlüssigen Verbindung das Band (15) derart befestigen, dass das Band (15) auf der zum Profil (6) hin weisenden Seite (14) keine Unebenheiten aufweist.

4. Abzugsvorrichtung (4) nach Anspruch 2 oder 3, **dadurch gekennzeichnet, dass** das sich über mehrere Stollen (2) erstreckende Band (15) über die Mittel (13) geklemmt ist.

5. Abzugsvorrichtung (4) nach mindestens einem der vorigen Ansprüche, **dadurch gekennzeichnet, dass** das sich über mehrere Stollen (2) erstreckende Band (15) aus mehreren Teilen besteht.

6. Abzugsvorrichtung (4) nach mindestens einem der vorigen Ansprüche, **dadurch gekennzeichnet, dass** die Mittel (13) zur Herstellung einer form- oder kraftschlüssigen Verbindung auf dem Stollenträger (9) aufgeschraubt oder aufgeschoben werden.
